# EUROPÄISCHE PATENTSCHRIFT

(11) **EP 2 754 476 B1**
(45) Veröffentlichungstag und Bekanntmachung des Hinweises auf die Patenterteilung: **09.08.2017**
(21) Anmeldenummer: 14164122.5
(22) Anmeldetag: 07.09.2010
(51) Int. Cl.: B01D 33/23, B01D 29/03

(54) **Kreissegment zur Aufnahme eines Filtersegments**
Segment of a circle for holding a filter segment
Segment circulaire destiné à réceptionner un segment de filtre

(30) Priorität: 07.09.2009 DE 102009029244
(43) Veröffentlichungstag der Anmeldung: 16.07.2014
(62) Teilanmeldung aus: 10175612.0
(73) Patentinhaber: Huber SE, 92334 Berching (DE)
(72) Erfinder: Rong, Oliver, 92334 Berching (DE); Reber, Stefan, 90429 Nürnberg (DE); Kerl, Thomas, 92360 Mühlhausen (DE); Wittmann, Torsten, 92334 Berching (DE)
(74) Vertreter: Baudler, Ron

(56) Entgegenhaltungen:
- DE-A1- 1 461 437
- DE-A1- 1 954 918
- DE-A1-102007 018 054

## Beschreibung

Beschrieben wird ein Filtersegment für den Einsatz in einer Filtrationsvorrichtung, insbesondere einem Rotationsfilter zum Filtern von Flüssigkeiten, mit einem wenigstens teilweise aus Kunststoff bestehenden und eine Filtrationsfläche umschließenden Rahmenelement, in das wenigstens ein flächiges, die Filtrationsfläche überspannendes Filtermaterial eingebettet ist sowie ein Kreissegment zur Aufnahme wenigstens eines Filtersegments und für den Einsatz in einer Filtrationsvorrichtung, insbesondere einem Rotationsfilter zum Filtern von Flüssigkeiten, wobei das Kreissegment zwei gegenüberliegende Seitenabschnitte aufweist, die jeweils eine Innenfläche zur Führung des Filtersegments und eine entsprechende Außenfläche aufweisen, welche als Nachbarfläche für die korrespondierende Außenfläche eines weiteren Kreissegments ausgebildet ist, und wobei das Kreissegment aus lösbar miteinander verbundenen Einzelelementen besteht.

Filtersegmente kommen beispielsweise beim Filtern von Abwasser aber auch sonstiger Flüssigkeiten zum Einsatz, die mit unerwünschten Fremdstoffen belastet sind. Im Falle des Einsatzes in Rotationsfiltern sind diese meist kreis- oder polygonförmig um eine sich drehende Hohlwelle platziert und bilden hierdurch entsprechende Filterscheiben, wobei wiederum mehrere dieser Filterscheiben zur Erhöhung der wirksamen Filterfläche parallel zueinander angeordnet sein können. Um eine sichere Führung der Filtersegmente zu gewährleisten, sind diese meist rahmenförmig von entsprechenden Kreissegmenten umgeben, die schließlich miteinander verbunden werden können, um ein stabiles Gerüst für die Filtersegmente zu bilden. Grundsätzlich besteht hierbei das Bedürfnis, den Aufbau der jeweiligen Filterscheiben zu vereinfachen, um insbesondere einen schnellen Austausch der Filtersegmente während entsprechender Wartungsarbeiten zu ermöglichen, wobei dennoch eine ausreichende Stabilität und Führung der jeweiligen Filtersegmente gewährleistet werden soll.

Um diese Forderungen zu erfüllen, schlägt beispielsweise die US 6,231,761 B1 einen Rotationsfilter vor, dessen Filterscheiben eine Vielzahl von miteinander in Kontakt stehenden Kreissegmenten aus Metall aufweisen, die wiederum als Führung für die entsprechenden Filtersegmente dienen. Um einen Austausch derselben zu ermöglichen, weist jedes Kreissegment ein Deckelelement auf, das von dem restlichen Rahmenelement lösbar ist.

Mit dem Ziel, eine möglichst hohe Stabilität der eigentlichen Filterflächen zu gewährleisten, ist die Filterscheibe gemäß US 2,444,147 A mit radial nach außen laufenden Rippen ausgestattet, die zwischen zwei benachbarten Filtermembranen angeordnet sind. Hierdurch wird eine Verformung durch den auf die Filterfläche wirkenden Flüssigkeitsdruck verhindert. Jedoch weist die resultierende Filterscheibe durch die zusätzlichen Verstrebungen auch ein erhebliches Gewicht auf. Weitere Kreissegmente für Rotationsfilter sind in der DE 1954918, der DE 1461437 und der DE 102007018054 offenbart. Im Ergebnis sind zwar bereits verschiedenste Ausführungen entsprechender Filtersegmente bzw. als Rahmen dienender Kreissegmente bekannt. Dennoch besteht weiterhin Verbesserungsbedarf dahingehend, Gewicht und Herstellungskosten bei dennoch ausreichender Stabilität zu verringern.

Es ist daher Aufgabe der Erfindung, ein Kreissegment zur Aufnahme eines Filtersegments vorzuschlagen, die hinsichtlich Gewicht, Kosten und Formstabilität eine Weiterbildung des Standes der Technik darstellen.

Die Filtrationsfläche des Filtersegments ist frei von Zwischenverstrebungen. Hierdurch wird zum einen die wirksame Filterfläche maximiert. Zum anderen kann hierdurch auch verhindert werden, dass sich Schmutzstoffe vermehrt an entsprechenden Zwischenstreben festsetzen und damit die Filtrationsleistung verringern. Während herkömmliche Kunststoffrahmen stets mit Hilfe der genannten Zwischenverstrebungen stabilisiert wurden bzw. werden mussten, ist das Rahmenelement selbsttragend ausgestaltet und erlaubt daher einen Verzicht derartiger Verstrebungen. Neben der Erhöhung der Filtrationsleistung wird daher auch das Gesamtgewicht reduziert, so dass im Ergebnis ein Filterelement vorgeschlagen wird, das mehrere Vorteile miteinander vereint.

Hierbei ist es von hohem Vorteil, wenn das Rahmenelement, insbesondere durch die Gestaltung seiner Geometrie und/oder seiner Materialzusammensetzung, selbsttragend ausgestaltet ist. So kann das Rahmenelement beispielsweise Verstrebungen aufweisen, die aus Kunststoff oder auch einem beliebig anderen Material bestehen können. Ebenso ist es möglich, dass es aus einer Materialzusammensetzung besteht, die bereits an sich eine ausreichende Stabilität aufweist, um die selbsttragenden Eigenschaften zu gewährleisten. Denkbar ist in diesem Zusammenhang beispielsweise der Einsatz von hochfesten Kunststoffmaterialien und/oder Kunststoffen, die mit speziellen Fasern, wie z.B. Glasfasern, verstärkt sind. Auch kann das Rahmenelement mehrere Schichten unterschiedlicher Materialien aufweisen, wobei die jeweilige Materialzusammensetzung auch an unterschiedlichen Stellen des Rahmenelements variieren kann. Im Ergebnis kann in diesen Fällen auf einen innenliegenden Rahmen, beispielsweise aus Metall, verzichtet werden, so dass der Rahmen nicht zuletzt eine höhere Homogenität aufweisen kann.

Alternativ oder zusätzlich kann es jedoch auch von Vorteil sein, wenn innerhalb des Rahmenelements wenigstens eine Verstärkung, beispielsweise in Form eines das gesamte Rahmenelement durchziehenden Verstärkungsrahmens und/oder einzelner Verstärkungselemente, angeordnet ist. Hieraus ergeben sich Vorteile, die sich nicht nur positiv auf die Produktionskosten, sondern auch auf die Zuverlässigkeit derartiger Filtersegmente auswirken. So weisen die resultierenden Filtersegmente trotz einer leichten Kunststoffummantelung durch die integrierte Verstärkung eine hohe Steifigkeit auf, die insbesondere bei hohen Filtrationsleistungen und den damit verbundenen hohen Strömungsgeschwindigkeiten im Bereich des eigentlichen Filtermaterials notwendig ist, um eine hohe Lebensdauer, geringe Folgekosten sowie einen zuverlässigen Betrieb der Filteranlage gewährleisten zu können. Die Verstärkung kann dabei entweder als mit Kunststoff ummantelter Basisrahmen ausgebildet sein oder aber einen Kunststoffrahmen in Form einzelner Verstärkungselemente durchziehen. In diesem Fall wäre es beispielsweise denkbar, nur einige Abschnitte, wie die Eckbereiche oder aber auch die zwischen diesen Eckbereichen angeordneten Längs- bzw. Querverstrebungen mit entsprechenden Verstärkungen auszustatten. Die Wahl der Abmessungen richtet sich hierbei in der Regel nach der Art der Filtrationsvorrichtung, der Formgebung des Rahmenelements oder auch der zu erwartenden Belastung des Filtermaterials. Ebenso können der Verstärkungsrahmen oder die einzelnen Verstärkungselemente beliebige Profile aufweisen, um bei möglichst geringem Materialeinsatz eine dennoch hohe Stabilität zu erreichen. Weiterhin ist es denkbar, dass das Rahmenelement selbst aus gleichartigen oder unterschiedlich ausgebildeten Einzelteilen besteht, die wiederum einen Kunststoffmantel und darin eingebettete Verstärkungen aufweisen.

Auch ist es von Vorteil, wenn das Filtermaterial thermisch eingebettet ist. Der Kunststoffrahmen wird hierfür nach dem Auflegen des eigentlichen Filtermaterials leicht erwärmt, wobei Temperatur und/oder Zeitdauer hierbei vorteilhafterweise derart gewählt werden, dass sich die Kunststoffoberfläche erweicht. Hat der Kunststoff schließlich seine gewünschte Beschaffenheit erreicht, so werden die Fasern des Filtermaterials im Randbereich der Filterfläche wenigstens teilweise von dem angeschmolzenen Kunststoff durchdrungen. Nach dem Erkalten des Kunststoffs erhält man schließlich einen Formschluss zwischen Rahmenelement und Filtermaterial, ohne dass zusätzliche Mittel wie Kleber oder Schraubverbindungen notwendig wären.

Ebenso bringt es Vorteile mit sich, wenn die Verstärkung aus Metall, insbesondere Aluminium, Eisen und/oder Stahl, und/oder einem Kunststoff, wie beispielsweise Glasfaser und/oder Kunststofffaser, besteht. Derartige Materialien sind in beliebiger Beschaffenheit verfügbar, wobei die Kunststoffummantelung der Verstärkung den Vorteil hat, dass auch pH- oder temperaturempfindliche Materialien, wie z.B. herkömmlicher Stahl, Verwendung finden können, da die Verstärkung selbst nicht mit der zu filternden Flüssigkeit in Kontakt kommt.

Vorteilhaft ist es zudem, wenn das Rahmenelement wenigstens eine Dichtlippe aufweist, die vorzugsweise senkrecht zur Filtrationsfläche und/oder in Verlängerung des Filtermaterials verläuft. Eine derartige Dichtlippe, deren Profil selbstverständlich an die jeweiligen Ausgestaltungen der Filtrationsvorrichtung angepasst werden kann, ermöglicht eine zuverlässige Abdichtung gegenüber entsprechenden Führungen, beispielsweise in Form von Kreissegmenten, die wiederum zu einer Filterscheibe zusammengesetzt werden können. Insbesondere bei der Verwendung in Rotationsfiltern werden in der Regel jeweils zwei Filtersegmente parallel zueinander durch ein Kreissegment geführt, wobei sich zwischen den Filtersegmenten ein Hohlraum ausbildet, in den schließlich die zu filternde Flüssigkeit eintritt und nach dem Filtrationsvorgang aus dem Rotationsfilter abfließen kann. Insbesondere in diesem Fall ist eine zuverlässige Abdichtung der Filtersegmente gegenüber dem Kreissegment erforderlich, um ein Austreten von ungefilterter Flüssigkeit aus dem genannten Hohlraum neben den eigentlichen Filterflächen zu vermeiden.

Vorteilhafterweise ist die Dichtlippe mit dem Rahmenelement verbunden, beispielsweise angespritzt, oder mit diesem einteilig ausgebildet. Während der für die Herstellung des Rahmenelements gewählte Kunststoff im zuletzt genannten Fall vorzugsweise eine bestimmte (Oberflächen-)Beschaffenheit aufweisen sollte, die eine Abdichtung des Filtersegments gegenüber benachbarter Bauteile, wie beispielsweise einem Kreissegment, ermöglicht, kann eine separate Dichtlippe auch bei besonders harten oder spröden Kunststoffarten problemlos eingesetzt werden. Neben einem Anspritzen derselben sind auch andere Befestigungsmöglichkeiten gegeben, beispielswei,se in Form entsprechender Nut-Feder-Verbindungen oder auch verschiedener Heiß- oder Kalt-Klebeverfahren.

In einer weiteren vorteilhaften Weiterbildung besteht das Filtermaterial aus einem Gewebe aus Metall, vorzugsweise Edelstahl, einem Kunststoff und/oder einem natürlichen Gewebe, wobei sich die Wahl nach der Art der Filtrationsvorrichtung, der zu filternden Flüssigkeit, wie beispielsweise Abwasser, der zu erwartenden Verunreinigungen sowie der gewünschten Filtrationsleistung richtet.

Ebenfalls ist es besonders vorteilhaft, wenn das Rahmenelement zwischen zwei parallel zueinander verlaufenden Lagen des Filtermaterials angeordnet ist und mit diesen einen Hohlraum begrenzt, so dass das resultierende Filtersegment auch einzeln in Rotationsfiltern eingesetzt werden kann. Im Gegensatz hierzu können selbstverständlich auch Filtersegmente mit nur einer Lage Filtermaterial mit Hilfe einer entsprechenden Führung so zueinander angeordnet werden, dass der besagte Hohlraum entsteht.

Besondere Vorteile bringt es mit sich, wenn das Rahmenelement im Wesentlichen trapezförmig ausgebildet ist, da sich derartig geformte Filtersegmente auf einfache Weise zu entsprechenden Filterscheiben zusammensetzen lassen, wobei die resultierenden Filterscheiben eine mittige Durchbrechung aufweisen, durch die meist eine entsprechende und in der Regel als Hohlwelle ausgebildete Drehachse verläuft. Die Rahmenelemente können dabei als herkömmliches Trapez mit vier geradlinig verlaufenden Seitenlinien ausgebildet sein. Vorteilhafterweise können aber auch die Basis und die der Basis gegenüberliegende Grundseite eine leichte Bogenform beschreiben, so dass die resultierende Filterscheibe eine kreisrunde Umfangslinie aufweist, wobei diese im Fall der Verwendung von gradlinigen Rahmenelementen mehreckig ausgebildet wäre.

Zudem ist es von besonderem Vorteil, wenn das Filtermaterial vorgespannt ist. Diese Vorspannung wird in der Regel dadurch realisiert, dass während des Aufbringens des Filtermaterials entweder das Filtermaterial selbst nach außen gedehnt oder das Rahmenelement nach innen gestaucht wird. Nach Beendigung des Befestigungsvorgangs ist das Filtermaterial schließlich gespannt, so dass zum einen die Stabilität des Filtersegments erhöht und zum anderen eine stets flächige Ausrichtung der Filterfläche sichergestellt ist. Alternativ oder zusätzlich ist auch die Verwendung von Filtermaterialien möglich, die sich durch Zuführung von Wärme entsprechend stark ausdehnen. Werden derartige Materialien in erwärmtem Zustand auf das Rahmenelement aufgebracht, so ergibt sich nach dem Abkühlen des Filtersegments ebenfalls die gewünschte Vorspannung.

Das Kreissegment zur Aufnahme wenigstens eines Filtersegments zeichnet sich schließlich dadurch aus, dass wenigstens zwei der Einzelelemente gleichartig aufgebaut sind. Der entscheidende Vorteil ist hierbei in der Tatsache zu sehen, dass für diese Einzelelemente nur ein Werkzeug entworfen werden muss, so dass die Kosten drastisch gesenkt werden können. So kann das Kreissegment beispielsweise symmetrisch aufgebaut sein und aus nur zwei Einzelelementen bestehen, wobei durch die lösbare Verbindung beider Einzelelemente dennoch ein Austausch eines entsprechend aufgenommenen Filtersegments möglich ist. Zudem reduziert sich die Zahl der notwendigerweise vorrätig zu haltenden Einzelelemente. Somit wird ein Kreissegment vorgeschlagen, dass kostengünstig herzustellen, zu montieren und zu betreiben ist und dennoch die Vorteile herkömmlicher Kreissegmente aufweist. Rein vorsorglich sei in diesem Zusammenhang klargestellt, dass unter dem Begriff "Einzelelement" ausschließlich Elemente des Kreissegments zu verstehen sind, die in zusammengesetztem Zustand den Grundkörper des Kreissegments darstellen, so dass hierunter keine Kleinteile, wie z.B. Schrauben oder Dichtungselemente, fallen.

Weiterhin ist es von Vorteil, wenn das Kreissegment aus maximal vier, vorzugsweise maximal drei, Einzelelementen besteht. Während eine geringe Anzahl einer kostengünstigen Produktion der Einzelelemente entgegenkommt, können durch die Erhöhung derselben auch aufwändiger gestaltete Kreissegmente hergestellt werden. Als Kompromiss aus beiden Aspekten ergeben sich schließlich die oben genannten Zahlenangaben. Insbesondere hat es sich hierbei bewährt, das Kreissegment derart zu konstruieren, dass es aus zwei bis drei Grundelementen und einem Deckelelement besteht, welches nach außen zeigt, wenn mehrere Kreissegmente zu einer Filterscheibe zusammengesetzt werden. Hierdurch wird ein leichter Austausch des geführten Filtersegments möglich, da hierfür lediglich das Deckelelement entfernt werden muss, um das Filtersegment in radialer Richtung nach außen entnehmen zu können. Die restlichen Einzelelemente können dabei verbunden bleiben, so dass die Filterscheibe nicht vollständig zerlegt werden muss.

Auch ist es äußert vorteilhaft, wenn wenigstens zwei der Einzelelemente spiegelsymmetrisch angeordnet sind, um einen gleichmäßigen Aufbau und damit eine gleichmäßige Kraftverteilung während des Betriebs der entsprechenden Filtrationsvorrichtung sicherzustellen.

Des Weiteren sieht die Erfindung vor, dass wenigstens zwei der Einzeielemente einen im Wesentlichen L-förmigen Aufbau aufweisen. Diese Einzelelemente bilden in diesem Fall in zusammengesetztem Zustand ein U-förmiges Grundgerüst, das schließlich durch ein oder mehrere Deckelelemente derart vervollständigt wird, dass sich ein geschlossenes Kreissegment ergibt. Mehrere dieser Kreissegmente können schließlich zu einer Filterscheibe zusammengesetzt werden, wobei das oder die Deckelelemente entlang der resultierenden Umfangslinie der Filterscheibe angeordnet sind. Nach Entfernen des oder der Deckelelemente ist schließlich ein einfacher Ein- und Ausbau entsprechender Filtersegmente möglich.

Nicht zuletzt ist es vorteilhaft, wenn das Kreissegment zwei voneinander beabstandete und im Wesentlichen parallel verlaufende Führungen für die Aufnahme jeweils eines Filtersegments aufweist. In diese Führungen können schließlich Filtersegmente geschoben werden, so dass zwischen beiden Filterflächen ein Hohlraum entsteht, in den die zu filternde Flüssigkeit eingeleitet werden kann. Die Führungen können zudem über Dichtungselemente verfügen, um einen Durchtritt von zu filternder Flüssigkeit außerhalb der eigentlichen Filterfläche zu verhindern. Ebenso können die Führungen, die beispielsweise eine U-förmige Innenfläche aufweisen können, in eine Richtung konisch verlaufen, um ein Verklemmen eines Filtersegments und damit ein sicheres Abdichten desselben gegenüber dem Kreissegment zu ermöglichen.

Vorteile bringt es zudem mit sich, wenn wenigstens zwei der Einzelelemente eine gemeinsame Verbindungsebene aufweisen, die senkrecht zu den Au-βenflächen verläuft. Hierdurch erhält man Kreissegmente, die wenigstens teilweise bezüglich einer Spiegelfläche symmetrisch sind, die wiederum parallel zur Filterfläche eines oder mehrerer eingebauter Filtersegmente verläuft. Beim Wechsel der Filtersegmente können die jeweiligen Einzelelemente schließlich voneinander getrennt und nach Einlagen eines neuen oder gewarteten Filtersegments wieder zusammengefügt werden. Das Filtersegment muss in diesem Fall nicht in die genannten Führungen eingeschoben werden, sondern kann vor dem Zusammensetzen der Einzelelemente auf einfache Weise als Art Zwischenlage zwischen die Einzelelemente gelegt werden.

In vorteilhafter Weise sind die Einzelelemente miteinander verschraubt, zusammengesteckt und/oder verbolzt, so dass ein einfacher Zusammenbau gewährleistet ist, wobei die Einzelelemente auch jederzeit wieder trennbar sind, um beispielsweise die Filtersegmente zu erneuern oder diese außerhalb der Filtrationsanlage zu warten.

Ebenso kann es durchaus von Vorteil sein, wenn zwischen wenigstens zwei Einzelelementen ein Dichtungselement angeordnet ist. Während es selbstverständlich auch möglich ist, die Oberflächenbeschaffenheit der Einzeleiemente, die vorzugsweise aus Kunststoff bestehen, derart zu wählen, dass eine ausreichende Abdichtung gegenüber der zu filternden Flüssigkeit gewährleistet ist, ist die Anbringung entsprechender Dichtungselemente eine sichere Alternative, um die gewünschte Abdichtung zu erzielen.

Weiterhin ist es vorteilhaft, wenn wenigstens ein Einzelelement ein Verbindungselement für die Verbindung mit einem weiteren Kreissegment aufweist, um schließlich mehrere Kreissegmente derart zusammensetzen zu können, dass sich eine Filterscheibe ergibt, die wiederum je nach Form der Kreissegmente kreisrund aber auch mehreckig, z.B. 8- oder 10-eckig, ausgebildet sein kann.

Vorteilhafterweise umfasst das Verbindungselement schließlich eine Bohrung, einen Zapfen, ein Gewinde, einen Teil einer Steckverbindung und/oder einen Teil einer Nutverbindung, um im Ergebnis eine einfache und dennoch stabile und leicht zu lösende Verbindung zu ermöglichen. Hierbei können die jeweiligen Verbindungselemente separate Bauteile darstellen oder aber auch bei der Herstellung der Einzelelemente mit angeformt werden.

Weitere Vorteile der Erfindung sind im Zusammenhang mit den nachfolgenden Ausführungsbeispielen beschrieben. Es zeigen:
- Figur 1: eine Draufsicht auf ein Filtersegment,
- Figur 2: eine perspektivische Ansicht eines erfindungsgemäßen Kreissegments mit integrierten Filtersegmenten,
- Figur 3: eine Schnittdarstellung entlang der Schnittlinie A in Figur 2, und
- Figur 4: eine perspektivische Ansicht eines nicht erfindungsgemäßen Kreissegments mit integrierten Filtersegmenten.

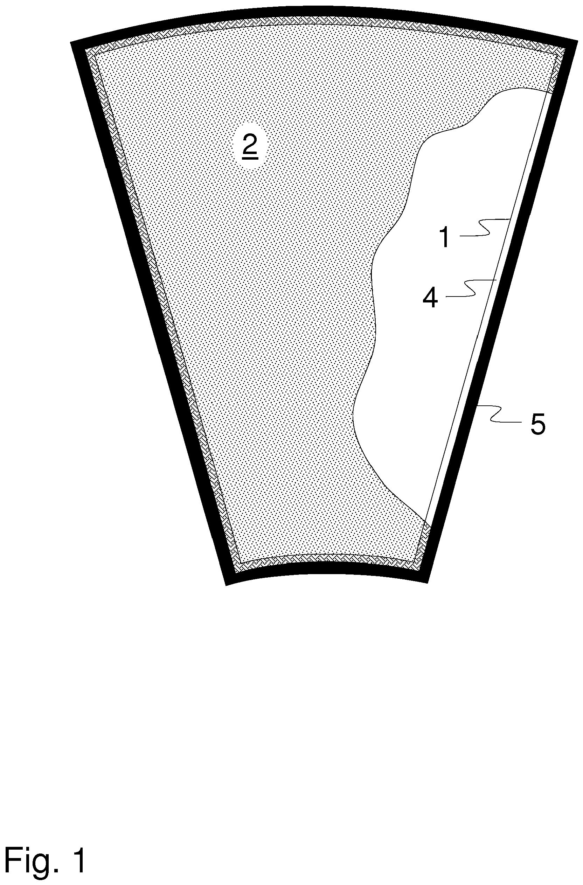

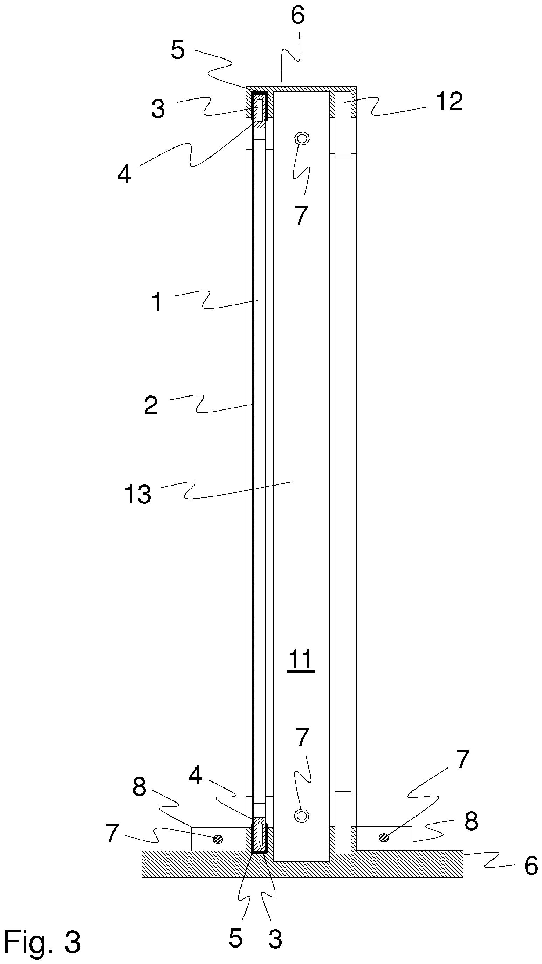

Figur 1 zeigt eine Draufsicht auf ein Filtersegment. Das Filtersegment besteht aus einem Rahmenelement 1, das als Stützgerüst für das eigentliche, eine Filtrationsfläche bildende, Filtermaterial 2 dient. Das Rahmenelement 1 weist eine Kunststoffoberfläche auf, die ein oder mehrere Verstärkungen 3, beispielsweise in Form eines Verstärkungsrahmens oder auch einzelner Verstärkungselemente (s. Fig. 3),umgeben kann.

Das Filtermaterial 2, beispielsweise ein Gewebe aus Metall- oder Kunststofffasern, ist wiederum wenigstens teilweise entlang einer Verbindungsfläche 4 in die Oberfläche des Kunststoffrahmens, beispielsweise mit Hilfe eines Schmelzverfahrens, eingebettet.

Wie Figur 1 darüber hinaus zu entnehmen ist, ist die Filtrationsfläche frei von Zwischenverstrebungen, so dass eine maximale Filtrationsleistung bei dennoch geringem Eigengewicht des Filtersegments verwirklicht werden kann. Das Rahmenelement 1 ist hierfür selbsttragend ausgestaltet, was beispielsweise durch die Auswahl eines formstabilen Kunststoffes oder die entsprechende Konstruktion des Rahmenelements 1 ermöglicht wird, wobei hier insbesondere die Grundform oder auch die Profilierung des Rahmenelements 1 zu berücksichtigen sind.

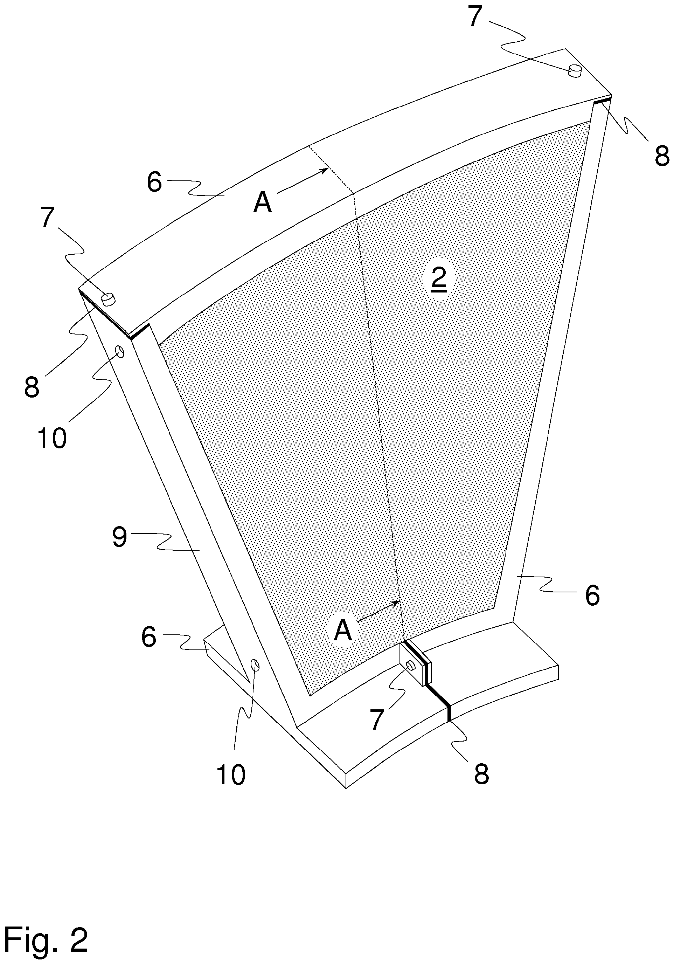

Um das Filterelement gegenüber einer späteren Aufnahme, vorzugsweise in Form eines erfindungsgemäßen Kreissegments, wie es in Figur 2 dargestellt ist, abdichten zu können, ist das Filtersegment von einer Dichtlippe 5 umgeben. Auch wenn diese im gezeigten Beispiel umlaufend verläuft, ist es auch möglich, nur einzelne Abschnitte der Umfangslinie mit entsprechenden Dichtlippen 5 zu versehen und/oder auch entsprechende Dichtungen an der korrespondierenden Gegenfläche eines Kreissegments anzuordnen.

Figur 2 zeigt eine perspektivische Ansicht eines erfindungsgemäßen Kreissegments mit zwei parallel angeordneten Filtersegmenten, wobei sich die genaue gegenseitige Anordnung aus Figur 3 ergibt, auf die im Weiteren noch ausführlicher Bezug genommen wird.

Das Kreissegment besteht in der dargestellten Ausführung der Erfindung aus drei Einzelelementen 6, nämlich zwei gleichartigen und L-förmigen Grundelementen und einem oben liegenden Deckeielement, das nach dessen Entfernung einen Ein- bzw. Ausbau der Filtersegmente erlaubt. Sämtliche Einzelelemente 6 sind mit Hilfe lediglich angedeuteter Schrauben 7 lösbar miteinander verbunden, um die Einzelelemente 6 bzw. die Filtersegmente jederzeit einzeln austauschen zu können.

Um eine Abdichtung auch zwischen den jeweiligen Einzelelementen 6 sicherzustellen, sind zwischen diesen Dichtungselemente 8 angeordnet, die je nach genauer Ausgestaltung der Einzelelemente 6 flächig oder auch profiliert ausgebildet sein können.

Die beiden L-förmigen Einzelelemente 6 weisen wiederum entsprechende Außenflächen 9 auf, welche die Nachbarflächen für die korrespondierenden Außenflächen 9 weiterer benachbarter Kreissegmente darstellen. Um mehrere der erfindungsgemäßen Kreissegmente miteinander zu einer Filterscheibe verbinden zu können, sind im Bereich der Seitenabschnitte Verbindungselemente, beispielsweise in Form von Bohrungen 10, angeordnet. Diese dienen schließlich der Aufnahme entsprechender Zapfen oder Schrauben 7 (s. Fig. 3), mit denen ein zuverlässiger Kontakt zweier benachbarter Kreissegmente sichergestellt wird, wobei zwischen den jeweiligen Außenflächen 9 selbstverständlich ebenfalls nicht gezeigte Abdichtungen angeordnet sein können. Alternativ ist es jedoch auch möglich, dass die Außenflächen 9 des hier dargestellten Kreissegments im zusammengebauten Zustand der Filtrationsvorrichtung etwas beabstandet von den korrespondierenden Außenflächen 9 weiterer Kreissegmente angeordnet sind, so dass kein direkter Kontakt besteht.

Weiterhin ist in Figur 3 eine Schnittdarstellung entlang der angedeuteten Schnittlinie A in Figur 2 dargestellt. Wie hieraus ersichtlich, weisen die einzelnen Einzelelemente 6 des Kreissegments zwei parallel an ihrer Innenfläche 11 verlaufende Umlaufkanten auf, die Führungen 12 für die Filtersegmente bilden, wobei in Figur 3 zur besseren Übersicht lediglich ein Filtersegment gezeigt ist. Im fertig montierten Zustand begrenzen die Filtersegmente schließlich einen Hohlraum 13, in den die zu filternde Flüssigkeit geleitet wird, um anschließend das Filtermaterial 2 zu passieren.

Die Filterelemente selbst besitzen eine Verstärkung 3, beispielsweise in Form eines das gesamte Rahmenelement 1 durchziehenden Verstärkungsrahmens und/oder einzelner Verstärkungselemente. Hierdurch wird eine hohe Stabilität auch bei geringem Gewicht der Filtersegmente gewährleistet, wobei die Verstärkung 3 selbst nicht mit der zu filternden Flüssigkeit, die das Filtermaterial 2 vom Hohlraum 13 kommend passiert, in Berührung kommt. Somit können als Verstärkung 3 auch Elemente aus korrosions- oder pHempfindlichen Materialien, wie beispielsweise herkömmlicher Stahl, zum Einsatz kommen. Ebenso kann auch auf die Verstärkung 3 verzichtet werden, falls das Rahmenelement 1 durch die entsprechende Wahl von Kunststoff und/oder Form bereits ohne Verstärkung 3 selbsttragende Eigenschaften aufweist. Um dies zu erreichen, kann das Rahmenelement 1 auch über verschiedenste Profilierungen verfügen, die wiederum als rahmeninterne Verstrebungen wirken.

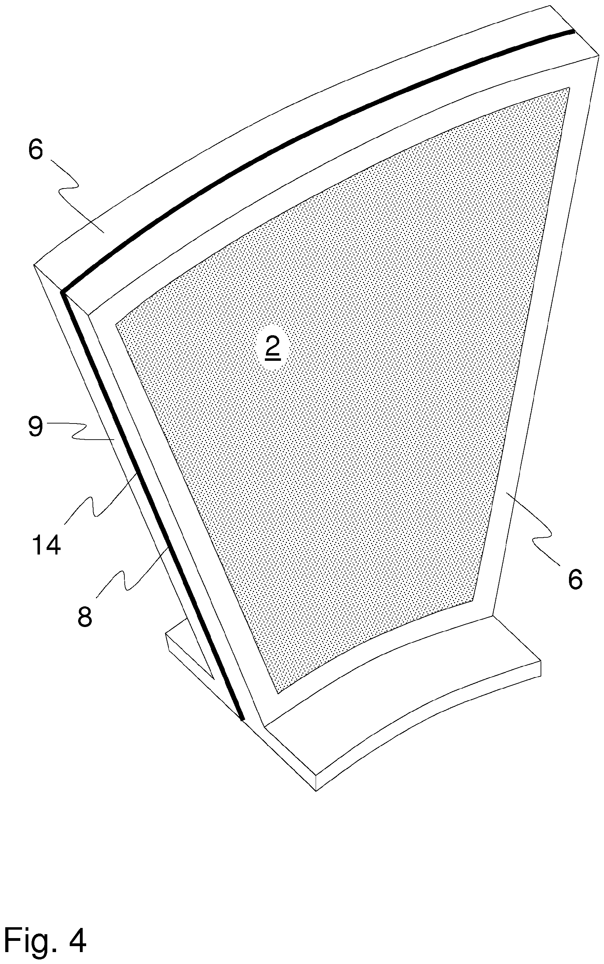

Schließlich ist in Figur 4 eine weitere Ausgestaltung eines Kreissegments gezeigt, wobei dessen beide Einzelelemente 6 eine Verbindungsebene 14 aufweisen, die parallel zu den Filterflächen der eingesetzten Filtersegmente verläuft. Auch bei dieser Ausführungsform ergibt sich schließlich der Vorteil, dass beide Einzelelemente 6 gleichartig aufgebaut sein können, so dass nur ein Werkzeug zu deren Herstellung entwickelt werden muss.

Im Übrigen ist die Erfindung nicht auf die dargestellten Ausführungsbeispiele beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung. So können selbstverständlich auch die Einzelelemente 6 des erfindungsgemäßen Kreissegments über Verstärkungen verfügen, wie sie im Zusammenhang mit dem Filtersegment beschrieben sind.

## Patentansprüche

1. Kreissegment zur Aufnahme wenigstens eines Filtersegments und für den Einsatz in einem Rotationsfilter zum Filtern von Flüssigkeiten, wobei das Kreissegment zwei gegenüberliegende Seitenabschnitte aufweiset, die jeweils eine Innenfläche (11) zur Führung des Filtersegments und eine entsprechende Außenfläche (9) aufweisen, welche als Nachbarfläche für die korrespondierende Außenfläche (9) eines weiteren Kreissegments ausgebildet ist, wobei das Kreissegment aus lösbar miteinander verbundenen Einzelelementen (6) besteht, **dadurch gekennzeichnet, dass** zwei der Einzelelemente (6) gleichartig aufgebaut sind, einen im Wesentlichen L-förmigen Aufbau aufweisen und ein U-förmiges Grundgerüst bilden, das durch ein oder mehrere Deckelelemente derart vervollständigt ist, dass sich ein geschlossenes Kreissegment ergibt.

2. Kreissegment nach dem vorangegangenen Anspruch, **dadurch gekennzeichnet, dass** es aus maximal vier, vorzugsweise maximal drei, Einzelelementen (6) besteht.

3. Kreissegment nach einem oder mehreren der Ansprüche 1 und 2, **dadurch gekennzeichnet, dass** wenigstens zwei der Einzelelemente (6) spiegelsymmetrisch angeordnet sind.

4. Kreissegment nach einem oder mehreren der Ansprüche 1 bis 3, **dadurch gekennzeichnet, dass** das Kreissegment zwei voneinander beabstandete und im Wesentlichen parallel verlaufende Führungen (12) für die Aufnahme jeweils eines Filtersegments aufweist.

5. Kreissegment nach einem oder mehreren der Ansprüche 1 bis 4, **dadurch gekennzeichnet, dass** wenigstens zwei der Einzelelemente (6) eine gemeinsame Verbindungsebene (14) aufweisen, die senkrecht zu den Außenflächen (9) verläuft.

6. Kreissegment nach einem oder mehreren der Ansprüche 1 bis 5, **dadurch gekennzeichnet, dass** die Einzelelemente (6) miteinander verschraubt, zusammengesteckt und/oder verbolzt sind.

7. Kreissegment nach einem oder mehreren der Ansprüche 1 bis 6, **dadurch gekennzeichnet, dass** zwischen wenigstens zwei Einzelelementen (6) ein Dichtungselement (8) angeordnet ist.

8. Kreissegment nach einem oder mehreren der Ansprüche 1 bis 7, **dadurch gekennzeichnet, dass** wenigstens ein Einzelelement (6) wenigstens ein Verbindungselement für die Verbindung mit einem weiteren Kreissegment aufweist.

9. Kreissegment nach einem oder mehreren der Ansprüche 1 bis 8, **dadurch gekennzeichnet, dass** das Verbindungselement eine Bohrung (10), einen Zapfen, ein Gewinde, einen Teil einer Steckverbindung und/oder einen Teil einer Nutverbindung umfasst.

## Claims

1. A circular segment for receiving at least one filter segment and for use in a rotary filter for filtering fluids, the circular segment having two opposite side sections, each comprising an inner surface (11) for guiding the filter segment and a corresponding outer surface (9) implemented as an adjacent surface for the corresponding outer surface (9) of a further circular segment, the circular segment consisting of individual elements (6) releasably connected to each other, **characterized in that**, two of the individual elements (6) are identical in structure, comprise a substantially L-shaped structure, and form a U-shaped base frame completed by one or more cover elements, such that a closed circular segment is produced.

2. The circular segment according to the preceding claim, **characterized in that** said segment is consisting of a maximum of four, preferably a maximum of three, individual elements (6).

3. The circular segment according to any one or more of the claims 1 and 2, **characterized in that** at least two of the individual elements (6) are disposed as mirror images.

4. The circular segment according to any one or more of the claims 1 through 3, **characterized in that** the circular segment comprises two substantially parallel guides (12) spaced apart from each other for receiving one filter segment each.

5. The circular segment according to any one or more of the claims 1 through 4, **characterized in that** at least two of the individual elements (6) comprise a common connecting plane (14) running perpendicular to the outer surfaces (9).

6. The circular segment according to any one or more of the claims 1 through 5, **characterized in that** the individual elements (6) are screwed together, plugged together, and/or bolted to each other.

7. The circular segment according to any one or more of the claims 1 through 6, **characterized in that** a sealing element (8) is disposed between at least two individual elements (6).

8. The circular segment according to any one or more of the claims 1 through 7, **characterized in that** at least one individual element (6) comprises at least one connecting element for connecting to a further circular segment.

9. The circular segment according to any one or more of the claims 1 through 8, **characterized in that** the connecting element comprises a hole (10), a peg, a thread, a part of a plug connection, and/or a part of a matched joint.

## Revendications

1. Segment de cercle pour accueillir au moins un segment de filtre et pour l'utilisation dans un filtre rotatif pour la filtration de fluides, dans lequel le segment de cercle comporte deux sections latérales disposées l'une en face de l'autre, qui comportent respectivement une face intérieure (11) pour le guidage du segment de filtre et une face extérieure (9) afférente, laquelle se présente sous la forme d'une face adjacente pour la face extérieure (9) correspondante d'un autre segment de filtre, dans lequel le segment de cercle se compose d'éléments individuels (6) reliés les uns aux autres de manière dissociable, **caractérisé en ce que** deux des éléments individuels (6) présentent des configurations de même type, présentent une configuration essentiellement en L et forment une structure de base en U, qui est complétée par un ou plusieurs éléments de couvercle de sorte qu'il se forme un segment de cercle fermé.

2. Segment de cercle selon la revendication précédente, **caractérisé en ce qu'**il se compose d'un maximum de quatre, de préférence d'un maximum de trois éléments individuels (6).

3. Segment de cercle selon l'une ou plusieurs des revendications 1 et 2, **caractérisé en ce que** deux au moins des éléments individuels (6) sont disposés de manière symétrique l'un par rapport à l'autre.

4. Segment de cercle selon l'une ou plusieurs des revendications 1 à 3, **caractérisé en ce que** le segment de cercle comporte deux guidages (12) distants l'un de l'autre et s'étendant de manière essentiellement parallèle pour accueillir respectivement un segment de filtre.

5. Segment de cercle selon l'une ou plusieurs des revendications 1 à 4, **caractérisé en ce que** deux au moins des éléments individuels (6) présentent un plan de liaison (14) commun, s'étend perpendiculairement aux faces extérieures (9).

6. Segment de cercle selon l'une ou plusieurs des revendications 1 à 5, **caractérisé en ce que** les éléments individuels (6) sont vissés, accouplés et/ou boulonnés les uns avec les autres.

7. Segment de cercle selon l'une ou plusieurs des revendications 1 à 6, **caractérisé en ce qu'**un élément d'étanchéité (8) est disposé entre au moins deux éléments individuels (6).

8. Segment de cercle selon l'une ou plusieurs des revendications 1 à 7, **caractérisé en ce qu'**un élément individuel (6) au moins comporte au moins un élément de connexion pour la connexion avec un autre segment de cercle.

9. Segment de cercle selon l'une ou plusieurs des revendications 1 à 8, **caractérisé en ce que** l'élément de connexion comporte un alésage (10), un tourillon, un filetage, une partie d'un raccord à emboîtement et/ou une partie d'un assemblage à rainure.
